# EUROPEAN PATENT APPLICATION

(11) **EP 4 439 293 A1**
(43) Date of publication of application: **02.10.2024**
(21) Application number: 24165022.5
(22) Date of filing: 21.03.2024
(51) Int. Cl.: G06F 9/48, G06F 9/38, G06F 9/52

(54) **TASK DEPENDENCIES**

(30) Priority: 29.03.2023 GB 202304586
(71) Applicant: Imagination Technologies Limited, Kings Langley, Hertfordshire WD4 8LZ (GB)
(72) Inventor: KING, Ian, Kings Langley, Hertfordshire, WD4 8LZ (GB)
(74) Representative: CMS Cameron McKenna Nabarro Olswang LLP

(57) **Abstract**

A method of managing task dependencies within a task queue of a GPU is described. The method comprises determining a class ID and a resource ID for a task and also for any parent task of the task and outputting the class IDs and resource IDs for both the task itself and any parent task of the task for storage associated with the task in a task queue. The class ID identifies a class of the task from a hierarchy of task classes and the resource ID of the task identifies resources allocated and/or written to by the task.

## Description

### CROSS-REFERENCE TO RELATED APPLICATION

This application claims priority from UK patent application 2304586.7 filed on 29 March 2023, which is herein incorporated by reference in its entirety.

### TECHNICAL FIELD

The invention relates to tracking of task dependencies in a graphics processing unit (GPU).

### BACKGROUND

Within a GPU, tasks that are to be executed are typically held in a task queue and a scheduler selects tasks for execution from the task queue. Tasks can only be executed when their dependencies are met. These dependencies may relate to things outside the task queue (e.g. waiting for an external unit to finishing loading data that is required by the task) or they may be task-to-task dependencies within the task queue.

The embodiments described below are provided by way of example only and are not limiting of implementations which solve any or all of the disadvantages of known methods of managing task dependencies and scheduling tasks within a GPU.

### SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

A method of managing task dependencies within a task queue of a GPU is described. The method comprises determining a class ID and a resource ID for a task and also for any parent task of the task and outputting the class IDs and resource IDs for both the task itself and any parent task of the task for storage associated with the task in a task queue. The class ID identifies a class of the task from a hierarchy of task classes and the resource ID of the task identifies resources allocated and/or written to by the task.

A first aspect provides a method of managing task dependencies within a task queue of a GPU, the method comprising: determining a class ID and a resource ID for a task and also for any parent task of the task, wherein a class ID identifies a class of the task from a hierarchy of task classes and a resource ID of the task identifies resources allocated and/or written to by the task; and outputting the class IDs and resource IDs for both the task itself and any parent task of the task for storage associated with the task in a task queue.

Determining a resource ID for a task may comprise assigning a resource ID to the task.

Assigning a resource ID to the task may comprise: allocating resources to the task; and assigning a resource ID for the allocated resources to the task.

The resources may comprise shared registers, coefficient registers or local memory registers.

A second aspect provides a method of scheduling tasks within a GPU, the method comprising: examining tasks in a task queue and parameters associated with the tasks, wherein the parameters comprise a class ID and a resource ID for both the task itself and any parent task of the task, wherein a class ID identifies a class of the task from a hierarchy of task classes and a resource ID of the task identifies resources allocated and/or written to by the task; selecting a task for execution based on an order of the tasks in the queue and the parameters; and sending the selected task for execution.

Selecting a task for execution based on an order of the tasks in the queue and the parameters may comprise: selecting a task in the task queue with a parent task class ID and parent resource ID that does not match the class ID and resource ID of any tasks that precede it in the task queue.

A resource ID may be assigned to a task when the task is created.

Selecting a task for execution may be additionally based on a master unit that issued the task in the task queue.

The task queue may comprise tasks queued for execution and tasks currently running.

A third aspect provides a resource management unit of a GPU comprising: hardware logic arranged to determine a class ID and a resource ID for a task and also for any parent task of the task, wherein a class ID identifies a class of the task from a hierarchy of task classes and a resource ID of the task identifies resources allocated and/or written to by the task; and an output, arranged to output the class IDs and resource IDs for both the task itself and any parent task of the task for storage associated with the task in a task queue.

The hardware logic may be arranged to determine a resource ID for a task by assigning a resource ID to the task.

Assigning a resource ID to the task may comprise: allocating resources to the task; and assigning a resource ID for the allocated resources to the task.

The resources may comprise shared registers, coefficient registers or local memory registers.

A fourth aspect provides a scheduling and processing logic of a GPU comprising: analysis logic arranged to examining tasks in a task queue and parameters associated with the tasks, wherein the parameters comprise a class ID and a resource ID for both the task itself and any parent task of the task, wherein a class ID identifies a class of the task from a hierarchy of task classes and a resource ID of the task identifies resources allocated and/or written to by the task; and selection logic arranged to select a task for execution based on an order of the tasks in the queue and the parameters and send the selected task for execution.

The selection logic may be arranged to select a task for execution based on an order of the tasks in the queue and the parameters by: selecting a task in the task queue with a parent task class ID and parent resource ID that does not match the class ID and resource ID of any tasks that precede it in the task queue.

A resource ID may be assigned to a task when the task is created.

The selection logic may be further arranged to select a task for execution based on a master unit that issued the task in the task queue.

The task queue may comprise tasks queued for execution and tasks currently running.

A fifth aspect provides a GPU comprising: the resource management unit according to the third aspect; the scheduling and processing logic according to the fourth aspect; the task queue; and the resources.

A sixth aspect provides a GPU configured to perform the method of the first aspect.

The GPU may be embodied in hardware on an integrated circuit. There may be provided a method of manufacturing, at an integrated circuit manufacturing system, a GPU. There may be provided an integrated circuit definition dataset that, when processed in an integrated circuit manufacturing system, configures the system to manufacture a GPU. There may be provided a non-transitory computer readable storage medium having stored thereon a computer readable description of a GPU that, when processed in an integrated circuit manufacturing system, causes the integrated circuit manufacturing system to manufacture an integrated circuit embodying a GPU.

There may be provided an integrated circuit manufacturing system comprising: a non-transitory computer readable storage medium having stored thereon a computer readable description of the GPU; a layout processing system configured to process the computer readable description so as to generate a circuit layout description of an integrated circuit embodying the GPU; and an integrated circuit generation system configured to manufacture the GPU according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

### BRIEF DESCRIPTION OF THE DRAWINGS

Examples will now be described in detail with reference to the accompanying drawings in which:
Figure 1 shows two different representations of a first group of dependent tasks;
Figure 2 shows two different representations of a second group of dependent tasks;
Figure 3 shows two different representations of two overlapping groups of dependent tasks;
Figure 4 shows an example method of managing task dependencies within a task queue;
Figure 5 shows an example method of task scheduling that uses task dependency information stored in the task queue;
Figure 6 shows a schematic diagram of a GPU that implements the methods of Figures 4 and 5;
Figure 7 shows a computer system in which a GPU, such as that shown in Figure 6, is implemented; and
Figure 8 shows an integrated circuit manufacturing system for generating an integrated circuit embodying a GPU.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

### DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only.

As described above, tasks that are to be executed by a GPU are typically held in a task queue and a scheduler selects tasks for execution from the task queue. Tasks can only be executed when their dependencies are met, where these dependencies may be external or may be internal to the task queue (i.e. task-to-task dependencies within the task queue). The scheduler uses the dependency information to determine which task can be selected next for execution and which tasks can be executed in parallel. Internal dependencies within the task queue limit the ability of the scheduler to select tasks for execution from the task queue in age order and this may increase the latency for some tasks. As well as holding tasks that are yet to be executed, the queue may also hold tasks that are running and tasks in the queue may be in a `queued' or 'running' state.

In order to increase the scheduling freedom, the concept of sequential dependency groups may be used. Tasks within a sequential dependency group are scheduled in order (i.e. task order is preserved within a sequential dependency group) but non-dependent tasks within the queue can be scheduled more freely. These sequential dependency groups may be defined implicitly based on classifying tasks and defining a hierarchy of the task classes; however, this relies upon the sequential dependency groups all being independent of each other. If a task of a class at the highest level of the hierarchy is shared between tasks at the next level down in the classification, then the sequential dependency groups are not independent of each other. This could be resolved by merging the two overlapping sequential dependency groups, but results in large sequential dependency groups which reduces the scheduling freedom and increases latency for some tasks.

Described herein are methods of managing task dependencies within a task queue (e.g. within a single task queue) and methods of scheduling tasks based on those task dependencies. As described below, tasks in a task queue are tagged with a plurality of parameters: the class of the particular task and an identifier for any cross-task resources allocated by and/or written to by that task and the class of the immediate parent task of the particular task and an identifier for any cross-task resources allocated by and/or written to by that parent task. Each task will be tagged with three or four of these parameters because some tasks may not allocate or write to any cross-task resources and so the identifier for the cross-task resource written by that resource may be missing. Examples of cross-task resources that may be allocated and/or written to by a task include shared registers, coefficient registers and local memory registers. There may be a correlation between the type of cross-task resources that may be written to by a task and the class of the task. Only one task allocates a cross-task resource but there may be none, one or multiple other tasks that write to a particular cross-task resources (as described in more detail below). Where multiple tasks write to a particular cross-task resource, each may write to a different, non-overlapping portion of the resource which has been previously allocated.

An example hierarchy of task classes is shown in the table below with the rows in order from top to bottom:

| Task class | Number of tasks | Cross-task resources that can be allocated and/or updated |
|---|---|---|
| State | 0 or 1 | Shared registers |
| Coefficient | 0 or more | Coefficient registers or local memory registers |
| Work | 0 or more | None |

Whilst this example shows three different task classes, in other examples there may be a different number of task classes. In all examples, the lowest class of task in the hierarchy cannot allocate or update (i.e. write to) cross-task resources (but can only allocate and/or update per-task resources) and the fact that a class of task has the ability to allocate or update cross-task resources does not mean that it necessarily does allocate or update any cross-task resources.

As shown in the table above, a state task has the ability to allocate and/or update shared registers. These shared registers may, for example, be updated by a secondary program that is run as a consequence of the state update task. The nature of the coefficient and work tasks may depend upon the hardware unit (which may be referred to as the master unit) that fed the particular data (e.g. data related to the per-instance shader invocation) into the particular GPU pipeline. Within a GPU there may be different types of master unit, for example a GPU may comprise one or more of the following: a vertex master unit, a domain master unit, a compute master unit, a 2D master unit, a pixel master unit (which may also be referred to as a 3D master unit or a fragment master unit) and a ray master unit.

Coefficient tasks that are issued by a compute master unit typically update data in local memory registers and a work task that is issued by a compute master unit is the main compute kernel shader. Coefficient tasks that are issued by a vertex or domain master unit are vertex or domain shaders respectively. These may update data in local memory registers or may write directly to the buffer that stores output vertex data for the geometry pipeline to later consume. This buffer may be referred to as the Unified Vertex Buffer (UVB). A work task that is issued by a vertex or domain master unit is a geometry or hull shader.

Tasks of the top-most class do not depend upon other tasks whereas tasks from lower levels in the hierarchy depend upon tasks of a class at a higher level in the hierarchy. In many examples tasks always depend upon a task at the level in the hierarchy that is immediately above it, although this requirement may be relaxed in other examples. A task at a lower level in the hierarchy can access any cross-task resources allocated or updated by tasks above it in the hierarchy (i.e. any cross-task resources allocated or updated by the task's parent, or their parents, going all the way up to the top of the hierarchy). Tasks at the lowest level in the hierarchy are not able to allocate or update any cross-task resources.

The identifier for cross-task resources that are allocated and/or written to by a task may be referred to as a resource ID. The resource ID is assigned to a task when the task is created (e.g. by a resource management unit in the GPU). When the task is created, the resources may be allocated and the resource ID for the allocated resources assigned to the task. Alternatively, where a task is associated with an existing allocation of resources (e.g. as allocated when a previous task was created), the resource ID of the existing allocation is assigned to the task. The resource ID is unique within a task class but it may not necessarily be unique across all classes (e.g. tasks of different classes could have the same resource ID but one relates to shared registers and the other relates to coefficient registers or local memory registers). As well as being used to determine task dependencies (as described herein) the resource IDs are used to track pending dependent tasks and a resource ID is not reassigned (and the associated resources freed) until all the dependent tasks for that particular resource complete.

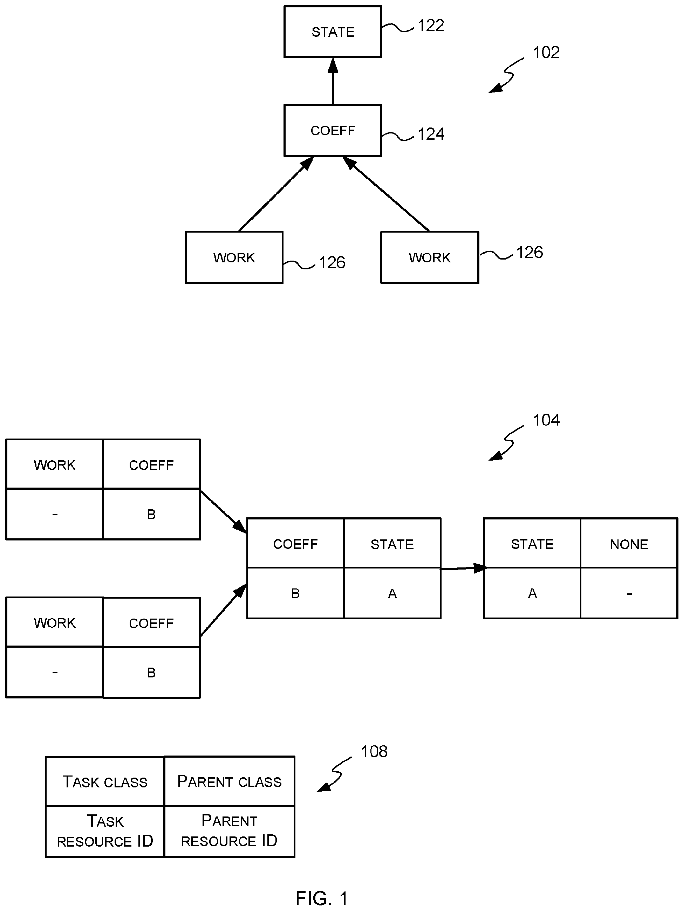

Figure 1 shows two different representations 102, 104 of the same group of dependent tasks. The first representation 102 shows the state task 122 at the top level of the hierarchy, with one dependent coefficient task 124 and two dependent work tasks 126. The second representation 104 shows these same tasks represented by the four parameters that the task is tagged with in the task queue, with the resource IDs shown as A and B. The legend 108 for this representation is also shown in Figure 1. Where the parent class is shown as 'NONE', this indicates that the task does not depend upon anything, whereas if the parent class is shown as `STATE' or 'COEFF' this indicates that the task depends upon a state task or a coefficient task respectively. Figure 1 shows a one-to-one relationship between coefficient tasks and state tasks and a many-to-one relationship between work tasks and coefficient tasks.

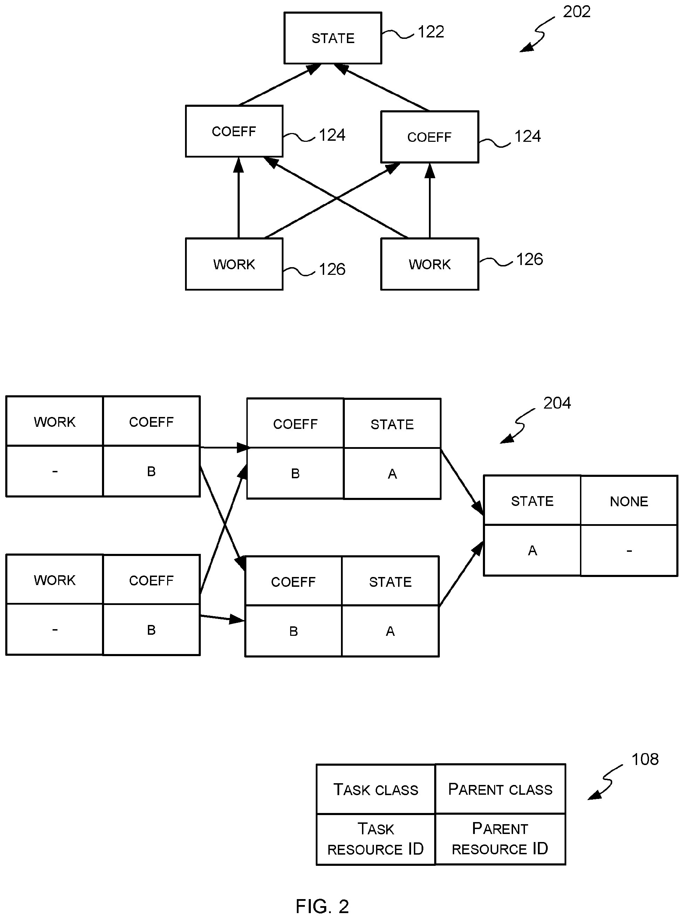

Figure 2 shows two different representations 202, 204 of a second group of dependent tasks. The first representation 202 shows the state task 122 at the top level of the hierarchy, with two dependent coefficient tasks 124 and two dependent work tasks 126. The second representation 204 shows these same tasks represented by the four parameters that the task is tagged with in the task queue, with the resource IDs shown as A and B. The legend 108 for this representation is also shown in Figure 2. Figure 2 shows a many-to-one relationship between coefficient tasks and state tasks and a many-to-many relationship between work tasks and coefficient tasks.

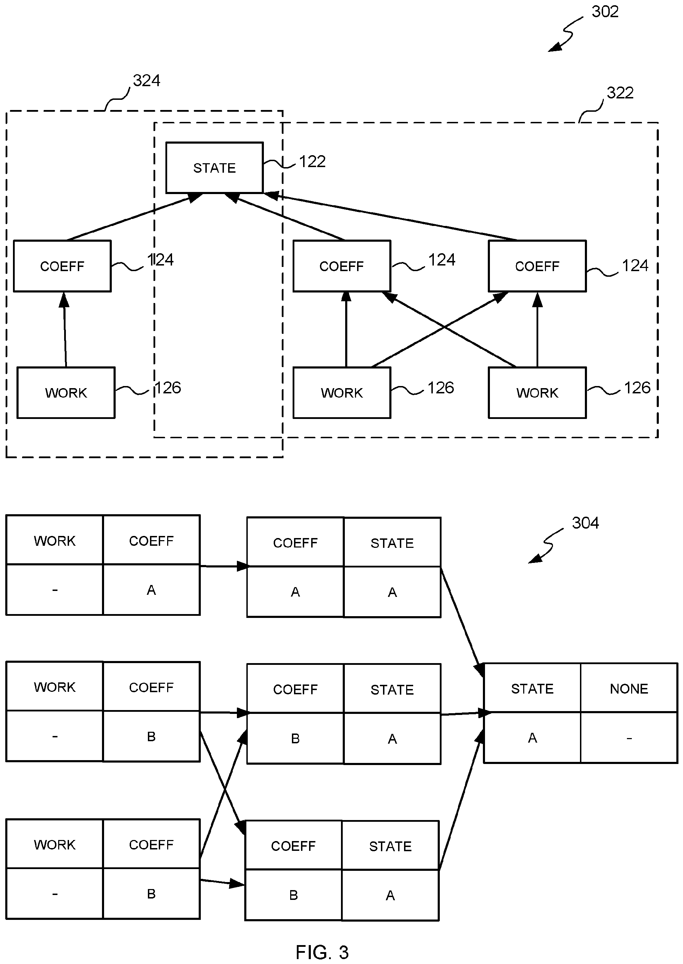

Figure 3 shows two different representations 302, 304 of two overlapping groups of dependent tasks. The first representation 302 shows a first group 322 that comprises the state task 122 at the top level of the hierarchy, with two dependent coefficient tasks 124 and two dependent work tasks 126. The first representation 302 also shows a second group 324 that comprises the same state task 122 as the first group at the top level of the hierarchy, with a different dependent coefficient task 124 and a different dependent work tasks 126. The second representation 304 shows these same tasks represented by the four parameters that the task is tagged with in the task queue, with the resource IDs shown as A and B. The legend for this representation is as also used in Figures 1 and 2. The first group 322 in Figure 3 shows a many-to-one relationship between coefficient tasks and state tasks and a many-to-many relationship between work tasks and coefficient tasks. The second group 324 in Figure 3 shows a one-to-one relationship between coefficient tasks and state tasks and a one-to-one relationship between work tasks and coefficient tasks. Within the second group 324, the coefficient task and the state task both have the same resource ID, A, however these correspond to different resources because of the different classes (e.g. resource ID A for the state task identifies one or more shared registers and resource ID A for the coefficient task identifies one or more coefficient registers or one or more local memory registers).

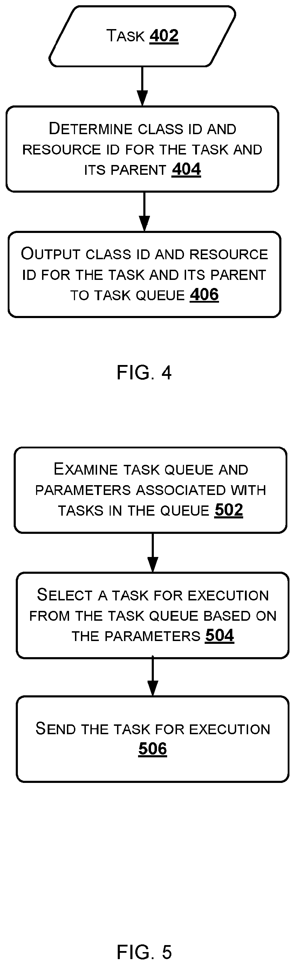

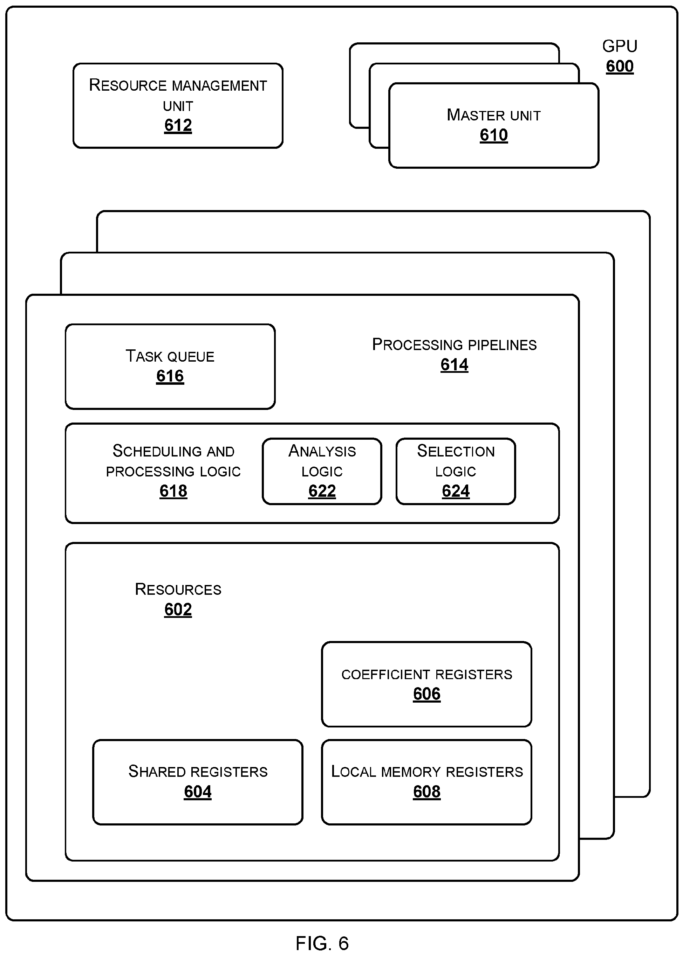

Figure 4 shows an example method of managing task dependencies within a task queue (e.g. within a single task queue) and Figure 5 shows an example method of task scheduling that uses the task dependency information described above. These methods may be implemented by a GPU 600 as shown in Figure 6. The GPU 600 comprises a plurality of resources 602 that may be allocated by tasks as cross-task resources as described above. These resources 602 comprise one or more of: shared registers 604, coefficient registers 606 and local memory registers 608. The GPU 600 further comprises a plurality of master units 610, a resource management unit 612 and a plurality of processing pipelines 614. Each processing pipeline 614 comprises a task queue 616 and scheduling and processing logic 608. As shown in Figure 6, the resources 602 may be grouped as part of the processing pipelines 614. It will be appreciated that the GPU 600 may comprise additional elements not shown in Figure 6.

The resource management unit 612 tracks resources and allocation for tasks being processed by the processing pipelines 614. Whilst Figure 6 shows a single resource management unit 612, in other examples where the processing pipelines 614 are arranged in clusters, there may be a separate resource management unit 612 for each cluster.

As shown in Figure 4, when a task is created (block 402), the resource management unit 612 determines the class ID and resource ID for both the task itself and any parent task (block 404), i.e. it determines the class ID and resource ID for the task and also determines the class ID and resource ID for any parent task of the task. This information is the output to a processing pipeline 614 (block 406), and in particular it is output to the task queue 616 containing the task and stored for subsequent use by the scheduling and processing logic 618 in the processing pipeline 614. As described above, the class ID of the task identifies a class of the task from a hierarchy of task classes and a resource ID of the task identifies resources allocated and/or written to by the task. Similarly, the class ID of a parent task identifies a class of the parent task from the hierarchy of task classes and a resource ID of the parent task identifies resources allocated and/or written to by the parent task.

As shown in Figure 5, when the scheduling and processing logic 618 selects a new task for execution, it examines the task queue and the parameters associated with tasks in the task queue (block 502, e.g. using the analysis logic 622). These parameters are those described above and shown in the legend 108 in Figures 1 and 2, i.e. the class of the particular task and an identifier for any cross-task resources allocated and/or written to by that task and the class of the immediate parent task of the particular task and an identifier for any cross-task resources written to by that parent task. Based on an order of tasks in the queue and the parameters, a task is selected from the task queue for execution (block 504, e.g. using the selection logic 624) and then sent for execution (block 506, e.g. by the selection logic 624) by the scheduling and processing logic 618.

The selection of a task based on the parameters (in block 504) comprises identifying a task in the task queue with a parent class and parent resource ID that does not match the class ID and resource ID of any tasks that precede it in the task queue (where the task queue is arranged in task age order with the oldest first), where, as described above, the task queue may store both tasks that are queued for execution and tasks that are running. In other words, a particular task is considered ineligible for selection if there is a preceding task in the task queue whose class and resource ID matches those of the particular task's parent class and parent resource ID. The particular task is ineligible (i.e. cannot be selected to run) because identifying a preceding, matching, task in the queue means that there are still tasks that are running or queued on which particular task is dependant. There may be additional criteria that are also used in combination with the dependency information when selecting tasks, e.g. based on the master unit 610 that issued the task in order to service the different master units fairly.

The use of the parameters associated with each task to select tasks for execution, as shown in Figure 5, enables more tasks to be executed in submission (i.e. age) order and hence reduces overall latency. Referring back to the examples shown in Figures 1-3, it may enable the coefficient and work tasks to be executed more closely to submission order than conventional methods which would execute all coefficient tasks within a sequential dependency group before executing any of the work tasks in the group. Furthermore, the use of the parameters associated with each task to select tasks for execution, as shown in Figure 5, improves scheduling where groups of tasks overlap (e.g. as shown in Figure 3) as it is not necessary to treat the overlapping groups as a single group and enforce task order within the combined group. Additionally, by using the methods described above the coefficient resources have a shorter lifetime / latency compared to where all state tasks are executed before the coefficient tasks and all the coefficient tasks executed before the work tasks, and this improves scheduling of tasks and increases efficiency. The methods described herein may be used for any type of master unit and hence provide a single, unified, dependency tracking scheme.

There are many different ways to represent the parent class of a task in the task queue (based on the parameters provided by the resource management unit 612) and these include use of an enum (enumerated type), one hot vector or a bit mask. For a small number of classes any of these may be used; however, use of an enum is more scalable (e.g. to an arbitrary number of classes) in scenarios where each task can only depend on one other resource type in the chain (but can depend upon more than one task, but those tasks are all associated with the same class and resource ID) and this results in a smaller task queue.

In the examples described above, the resources are tracked at the resource level, based on the resource ID. In examples where multiple tasks write to different non-overlapping portions of the same resource, the resources written to by a task may be tracked at a more granular level and this enables the tracking of tasks at a sub-task granularity. For example, for the many-to-many situations (e.g. as shown in the first group 322 in Figure 3) where multiple coefficient tasks write to non-overlapping portions of the same resource (and hence have the same resource ID), a more granular parameter may be provided along with, or instead of, the resource ID. This may enable some work tasks to start running before all the coefficient tasks are complete, because it can be determined, using the more granular parameters, that all the coefficient tasks that write data to the particular portion of a resource upon which a work task depends are complete. The more granular parameter, may be implemented, for example, using an additional mask describing the portion of the resource that a sub-task writes (if a parent task) or reads (if a child task). The portions of a resource may be referred to as a sub-resource. Where this sub-task granularity is used, the selection of a task (in block 504) determines that a task cannot be selected (i.e. is ineligible) where there is a matching mask of sub-resource regions.

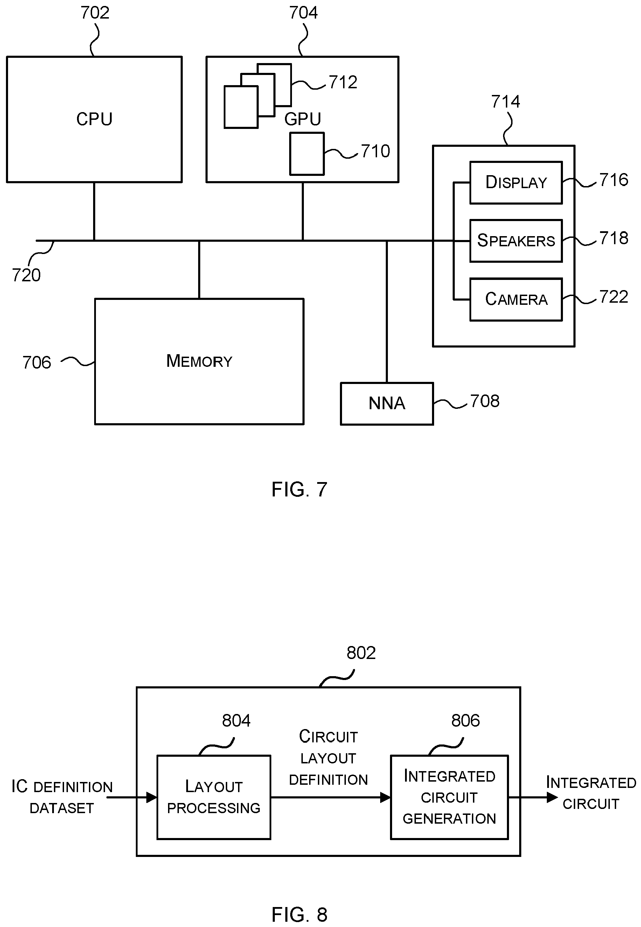

Figure 7 shows a computer system in which the graphics processing systems described herein may be implemented. The computer system comprises a CPU 702, a GPU 704, a memory 706, a neural network accelerator (NNA) 708 and other devices 714, such as a display 716, speakers 718 and a camera 722. A resource management unit 710 (corresponding to resource management unit 612) and a plurality of task queues 712 (correspond to task queues 616) are implemented on the GPU 704. In other examples, one or more of the depicted components may be omitted from the system. The components of the computer system can communicate with each other via a communications bus 720.

The GPU of Figure 6 is shown as comprising a number of functional blocks. This is schematic only and is not intended to define a strict division between different logic elements of such entities. Each functional block may be provided in any suitable manner. It is to be understood that intermediate values described herein as being formed by the methods described herein need not be physically generated by the GPU at any point and may merely represent logical values which conveniently describe the processing performed by the GPU between its input and output.

The GPU described herein may be embodied in hardware on an integrated circuit. The GPU described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a GPU configured to perform any of the methods described herein, or to manufacture a GPU comprising any apparatus described herein. An integrated circuit definition dataset may be, for example, an integrated circuit description.

Therefore, there may be provided a method of manufacturing, at an integrated circuit manufacturing system, a GPU as described herein. Furthermore, there may be provided an integrated circuit definition dataset that, when processed in an integrated circuit manufacturing system, causes the method of manufacturing a GPU to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a GPU will now be described with respect to Figure 8.

Figure 8 shows an example of an integrated circuit (IC) manufacturing system 802 which is configured to manufacture a GPU as described in any of the examples herein. In particular, the IC manufacturing system 802 comprises a layout processing system 804 and an integrated circuit generation system 806. The IC manufacturing system 802 is configured to receive an IC definition dataset (e.g. defining a GPU as described in any of the examples herein), process the IC definition dataset, and generate an IC according to the IC definition dataset (e.g. which embodies a GPU as described in any of the examples herein). The processing of the IC definition dataset configures the IC manufacturing system 802 to manufacture an integrated circuit embodying a GPU as described in any of the examples herein.

The layout processing system 804 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 804 has determined the circuit layout it may output a circuit layout definition to the IC generation system 806. A circuit layout definition may be, for example, a circuit layout description.

The IC generation system 806 generates an IC according to the circuit layout definition, as is known in the art. For example, the IC generation system 806 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 806 may be in the form of computer-readable code which the IC generation system 806 can use to form a suitable mask for use in generating an IC.

The different processes performed by the IC manufacturing system 802 may be implemented all in one location, e.g. by one party. Alternatively, the IC manufacturing system 802 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a GPU without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 8 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 8, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

## Claims

1. A method of operating a GPU, the method comprising scheduling tasks within the GPU by:
examining tasks in a task queue and parameters associated with the tasks (502), wherein the parameters comprise a class ID and a resource ID for both the task itself and any parent task of the task, wherein a class ID identifies a class of the task from a hierarchy of task classes and a resource ID of the task identifies resources allocated and/or written to by the task;
selecting a task for execution based on an order of the tasks in the queue and the parameters (504); and
sending the selected task for execution (506).

2. The method according to claim 1, wherein selecting a task for execution based on an order of the tasks in the queue and the parameters comprises:
selecting a task in the task queue with a parent task class ID and parent resource ID that does not match the class ID and resource ID of any tasks that precede it in the task queue.

3. The method according to any preceding claim, wherein a resource ID is assigned to a task when the task is created.

4. The method according to any preceding claim, wherein selecting a task for execution is additionally based on a master unit that issued the task in the task queue.

5. The method according to any preceding claim, wherein the task queue comprises tasks queued for execution and tasks currently running.

6. The method according to claim 1, further comprising managing task dependencies within the task queue of the GPU by:
determining a class ID and a resource ID for a task and also for any parent task of the task (404), wherein a class ID identifies a class of the task from a hierarchy of task classes and a resource ID of the task identifies resources allocated and/or written to by the task; and
outputting the class IDs and resource IDs for both the task itself and any parent task of the task for storage associated with the task in a task queue (406).

7. The method according to claim 6, wherein determining a resource ID for a task comprises assigning a resource ID to the task.

8. The method according to claim 7, wherein assigning a resource ID to the task comprises:
allocating resources to the task; and
assigning a resource ID for the allocated resources to the task.

9. The method according to any of claims 6-8, wherein the resources comprise shared registers, coefficient registers or local memory registers.

10. A scheduling and processing logic (618) of a GPU (600) comprising:
analysis logic (622) arranged to examining tasks in a task queue (616) and parameters associated with the tasks, wherein the parameters comprise a class ID and a resource ID for both the task itself and any parent task of the task, wherein a class ID identifies a class of the task from a hierarchy of task classes and a resource ID of the task identifies resources allocated and/or written to by the task; and
selection logic (624) arranged to select a task for execution based on an order of the tasks in the queue and the parameters and send the selected task for execution.

11. The scheduling and processing logic according to claim 10, wherein the selection logic is arranged to select a task for execution based on an order of the tasks in the queue and the parameters by:
selecting a task in the task queue with a parent task class ID and parent resource ID that does not match the class ID and resource ID of any tasks that precede it in the task queue.

12. The scheduling and processing logic according to claim 10 or 11, wherein a resource ID is assigned to a task when the task is created.

13. The scheduling and processing logic according to any of claims 10-12, wherein the selection logic is further arranged to select a task for execution based on a master unit that issued the task in the task queue.

14. The scheduling and processing logic according to any of claims 10-13, wherein the task queue (616) comprises tasks queued for execution and tasks currently running.

15. A GPU (600) comprising:
the scheduling and processing logic (618) according to any of claims 10-14; and
a resource management unit (612),
wherein the resource management unit comprises:
hardware logic arranged to determine a class ID and a resource ID for a task and also for any parent task of the task, wherein a class ID identifies a class of the task from a hierarchy of task classes and a resource ID of the task identifies resources allocated and/or written to by the task; and
an output, arranged to output the class IDs and resource IDs for both the task itself and any parent task of the task for storage associated with the task in a task queue (616).
